# EUROPEAN PATENT APPLICATION

(11) **EP 1 760 115 A1**
(43) Date of publication of application: **07.03.2007**
(21) Application number: 05749022.9
(22) Date of filing: 10.06.2005
(51) Int. Cl.: C08L 83/02, C09D 183/02, C09D 5/10

(54) **COMPOSITION AND METHOD FOR PRODUCING SAME**

(30) Priority: 16.06.2004 JP 2004178625
(71) Applicant: Nippon Paint Co., Ltd., Osaka-shi, Osaka 531-8511 (JP)
(72) Inventor: TOMINAGA, Hiroshi, c/o NIPPON PAINT CO., LTD.,, Neyagawa-shi, Osaka 5728501 (JP); ONISHI, Isamu, c/o NIPPON PAINT CO., LTD.,, Neyagawa-shi, Osaka 5728501 (JP); YAMAMORI, Naoki, c/o NIPPON PAINT CO., LTD.,, Neyagawa-shi, Osaka 5728501 (JP); ISHII, Keizo, c/o NIPPON PAINT CO., LTD.,, Neyagawa-shi, Osaka 5728501 (JP)
(74) Representative: Hart Davis, Jason
(86) International application number: PCT/JP2005/010710
(87) International publication number: WO 2005/123838

(57) **Abstract**

It is an object of the present invention to provide a composition containing a hydrolysate of organosilicate which can be stored stably for long term in spite of containing a large amount of water.

A composition containing a hydrolysate of organosilicate, a water-soluble and volatile stabilizer and water, wherein the content of water is 30% by weight or more of the whole composition.

## Description

### TECHNICAL FIELD

The present invention relates to a composition and a method of producing the same.

### BACKGROUND ART

A composition containing a hydrolysate of organosilicate is widely used as the raw material of a coating composition and for the production of ceramic by a sol-gel method. With respect to such a composition, for example, a method of hydrolyzing and polymerizing organosilicate in a solution consisting of water, alcohol and a catalyst to obtain the composition is known.

Such a composition is obtained by a process in which a silanol group is produced by a hydrolysis reaction between water and a silicate compound and a molecular weight of a condensate is increased by a condensation reaction of this silanol group.

Accordingly, it is generally difficult to store such a composition as a stable water-based composition for long term. That is, since in a composition, of which a solvent is predominantly composed of water, hydrolysis of organosilicate with water readily occurs, a molecular weight of a silicate compound gradually increases during storage and it becomes difficult to maintain the composition stably. Therefore, an amount of water to be used in the composition is generally 20% or less and a composition which is predominantly composed of an alcohol solvent is generally used (See Japanese Kokai Publication 2000-290283). However, in order to reduce an environmental burden or improve a working environment, it is desired to make the composition water-borne.

In Japanese Kokai Publication Hei6-316407, a method of producing silica sol by hydrolyzing organosilicate in water is described. However, this is a method of obtaining colloidal silica in particle form and the colloidal silica to be obtained is of limited application since it does not have reactivity inside the particle.

In Japanese Kokai Publication 9-503013, a composition obtained by mixing water-soluble metal silicate, water-soluble aminoxysilane having at least one primary amine group and water is disclosed. However, such a composition contains an alkali metal ion or an alkaline earth metal ion. Since these metal ions are not vaporized even by heating, they cannot be eliminated from the composition. For example, when the composition is used as a coating composition, this composition has a defect that water resistance is low. Therefore, a composition not using an alkali metal ion or an alkaline earth metal ion has been desired.

### DISCLOSURE OF THE INVENTION

### Problem to be Solved by the Invention

In view of the above state of the art, it is an object of the present invention to provide a composition containing a hydrolysate of organosilicate which can be stored stably for long term in spite of containing a large amount of water.

### Means for Solving the Problem

The present invention relates to a composition containing a hydrolysate of organosilicate, a water-soluble and volatile stabilizer and water, wherein the content of water is 30% by weight or more of the whole composition.

The stabilizer is preferably a compound having at least one lone electron-pair capable of being coordinated.

The stabilizer is preferably a compound containing a nitrogen atom and/or a basic compound.

The stabilizer is preferably at least one compound (A) selected from the group consisting of amine, pyridine and derivatives thereof.

The stabilizer is preferably alkanolamine.

The stabilizer may be a compound (B) having at least one bond selected from the group consisting of (β-ketoester, β-diester and β-diketone.

The stabilizer is preferably a mixture formed by mixing at least one compound (A) selected from the group consisting of amines, pyridines and derivatives thereof and a compound (B) having at least one bond selected from the group consisting of β-ketoester, β-diester and β-diketone in the proportions (A)/(B) of 1/0 to 1/1 by mole.

The content of the stabilizer is preferably 0.05 times or more by mole larger than an amount of a silicon atom.

The organosilicate is preferably alkyl silicate or aryl silicate.

In the alkyl silicate, its alkyl group is preferably at least one species selected from the group consisting of a methyl group, an ethyl group, a propyl group, an isopropyl group and a butyl group.

In the alkyl silicate, its alkyl group is preferably a methyl group and/or an ethyl group.

The present invention relates to a coating composition containing the composition mentioned above.

The present invention relates to a method of producing the composition mentioned above,
comprising the step of hydrolyzing and polymerizing organosilicate or a low molecular weight condensate thereof in a solvent containing a water-soluble and volatile stabilizer and water,
wherein in said step, the content of water is 30% by weight or more of the whole reactant mixture.

The present invention relates to a shop primer containing the composition mentioned above and zinc powder.

The present invention relates to a shop primer containing the composition mentioned above and an anticorrosive pigment.

Hereinafter, the present invention will be described in detail.

The composition of the present invention has prolonged storage stability since it makes the organosilicate exist stably in water-borne medium. Thereby, it is possible to make a composition containing a hydrolysate of organosilicate water-borne.

The stabilizer used in the present invention has a property by which organosilicate can be stabilized in the presence of water. That is, it become possible to store organosilicate stably even in water since the condensation reaction does not proceed further after the reaction proceeds to some extent when a condensation reaction of organosilicate is performed in the presence of the above stabilizer.

In addition, the stabilizer used in the present invention needs to be water-soluble and volatile. That is, it needs to be able to be uniformly mixed with water in an arbitrary proportion and form a homogeneous phase. Since the above stabilizer is a volatile compound, for example when the above composition is used as a coating composition, it is evaporated at the time of drying and does not remain in a coated film. Therefore, the stabilizer has an advantage that it does not exert an influence upon the properties of the coated film.

It is assumed that the composition of the present invention makes the organosilicate exist stably because the above stabilizer protects a reactive site to cause the condensation reaction of organosilicate. Such an effect can be attained, for example, by bonding of the above stabilizer to the silicon atom of organosilicate by an ionic bond or coordinating or chelating of the above stabilizer with the silicon atom of organosilicate.

A stabilizer bonding to the above silicon atom by an ionic bond or coordinating with or chelating with the above silicon atom is not particularly limited and examples of the stabilizers include a compound having at least one lone electron-pair capable of being coordinated. The above stabilizer chelating with the silicon atom is not particularly limited and it includes, for example, a compound having at least one bond selected from the group consisting of β-ketoester, β-diester and β-diketone.

The above compound having at least one lone electron-pair capable of being coordinated is not particularly limited and it includes, for example, a compound containing a nitrogen atom. The above compound having at least one lone electron-pair of a nitrogen atom capable of being coordinated is not particularly limited and it includes, for example, amine, pyridine, oxime, imine, pyrrole, pyrrolidone, amide, aniline, piperidine, and derivatives thereof. The above compound having at least one lone electron-pair of a nitrogen atom capable of being coordinated is preferably a basic compound because the basic compound can accelerate a hydrolysis reaction.

As the above compound having at least one lone electron-pair of a nitrogen atom capable of being coordinated, at least one compound (A) selected from the group consisting of amine, pyridine and derivatives thereof is particularly preferred. The above compound (A) is not particularly limited and includes, for example, alkanolamine such as ethanolamine, dimethylethanolamine and N-methylethanolamine; and secondary amines such as dimethylamine and diethylamine. As the above amine, alkanolamine is preferred because of its excellent stabilization effect and high safety, and among others, dimethylethanolamine and N-methylethanolamine are particularly preferred. The above compounds (A) may be used alone or in combination of two or more species.

As the above stabilizer, a compound (B) having at least one bond selected from the group consisting of β-ketoester, β-diester and β-diketone can also be used. The above compound (B) is not particularly limited and includes, for example, β-diketone acetylacetone such as acetylacetone, methyl acetoacetate, ethyl acetoacetate, n-propyl acetoacetate, i-propyl acetoacetate, n-butyl acetoacetate, sec-butyl acetoacetate, t-butyl acetoacetate, 2,4-hexane-dion, 2,4-heptane-dion, 3,5-heptane-dion, 2,4-octane-dion, 2,4-nonane-dion, and 5-methyl-hexane-dion. Among others, acetylacetone is preferred. The above compounds (B) may be used alone or in combination of two or more species.

The above stabilizer may be used in combination of the above compound (A) and the above compound (B). In this case, the ratio between the above compound (A) and the above compound (B) (A)/(B) is preferably 1/0 to 1/1 (by mole).

The content of the above stabilizer is preferably 0.05 times or more by mole larger than an amount of a silicon atom. A part of the above amine compounds are publicly known as a catalyst of hydrolysis of a silicate compound. However, conventionally, these compounds were used just for accelerating a progress of a hydrolysis reaction by making a reaction solution basic. Therefore, small amount of the compound was just added. In the present invention, the effect is attained by adding at a rate of 0.05 times or more by mole larger than an amount of a silicon atom since it is assumed that the effect is attained by coordination of a nitrogen atom with silicon. The above content is preferably equal or more times by mole larger than an amount of a silicon atom.

The composition of the present invention contains water in an amount 30% by weight or more of the whole composition. That is, the composition of the present invention is a water-based composition containing as much as 30% by weight or more of water and can make a composition containing a silicate compound, which is extremely hard to become water-borne conventionally, water-borne. The above content of water is preferably 35% by weight or more and more preferably 40% by weight or more.

In the above composition, the above-mentioned organosilicate is not particularly limited and it includes, for example, alkyl silicate, aryl silicate, alkali silicate, alkoxy silicate, alkoxyalkyl silicate, and modified compounds thereof. The above-mentioned organosilicate is preferably alkyl silicate from the viewpoint of workability.

As the above-mentioned alkyl silicate, it is preferred that its alkyl group is at least one species selected from the group consisting of a methyl group, an ethyl group, a propyl group, an isopropyl group and a butyl group from the viewpoint of general versatility, and that among others, the alkyl group is a methyl group and/or an ethyl group.

The above organosilicate, a hydrolysate of the above organosilicate, and/or a hydrolysis and condensation product of the above organosilicate are contained in the composition of the present invention. The hydrolysate of the organosilicate may be in a state of sol or a state of gel. The above-mentioned hydrolysis and condensation product of the organosilicate can be obtained by adding water, a catalyst and a solvent to organosilicate and partially hydrolyzing and condensing the resulting mixture.

PH of the above composition is preferably in the range of 8 to 13. When the pH is out of the above range, it is not preferred since the stability of the composition is deteriorated. Acid compounds such as nitric acid, sulfuric acid, acetic acid, hydrochloric acid and the like, and basic compounds such as sodium hydroxide, potassium hydroxide, ammonia and the like can be used for adjusting the pH.

The composition of the present invention may further contain zinc powder, i.e., powder of metal zinc. Since a rust preventing property can be improved by containing zinc powder, the composition of the present invention can be used as a shop primer. The shop primer is a coating composition which prevents the formation of rust for the duration of processing or assembling steel products and allows a film coated later to adequately exert anti-corrosion performance.

Thus, the composition of the present invention can be used as a shop primer coating composition by further containing zinc powder.

As the above-mentioned zinc powder, substances which has been commonly used in primer coating compositions can be employed, and the zinc powder preferably has an average particle diameter of about 1 to 20 µm and may be of any shape such as sphere, a low-profile shape and the like. The above-mentioned shop primer coating composition exhibits an anti-corrosive property through inhibiting the elution of steel by the elution of zinc in a corrosive solution and it can be used for steel sheets for marine vessels.

The above zinc powder may be one coated with an anticorrosive pigment in advance.

An amount of the zinc powder to be mixed is preferably set in the range of 3 to 60% by weight in terms of solid matter in the composition of the above shop primer, and more preferably set in the range of 5 to 55% by weight. When the amount of the zinc powder to be mixed is less than 3% by weight, anti-corrosion performance by zinc powder is largely deteriorated, and when it is more than 60% by weight, it is not preferable since a film forming property of the shop primer is deteriorated.

The composition of the present invention can be used as a shop primer coating composition by containing an anticorrosive pigment.

As the above-mentioned anticorrosive pigment, one or more species selected from molybdic acid salt compounds, tungstic acid salt compounds, chromic acid compounds, basic lead compounds, metaboric acid compounds, and metasilicic acid compounds can be used.

Here, specific examples of molybdic acid compounds include zinc molybdate, calcium molybdate, zinc phosphomolybdate and aluminum phosphomolybdate, specific examples of tungstic acid compounds include zinc tungstate and calcium tungstate, specific examples of chromic acid compounds include zinc chromate, basic lead chromate, strontium chromate and zinc chromate, specific examples of basic lead compounds include basic lead sulfate, basic lead carbonate and basic lead silicate, specific examples of metaboric acid compounds include barium metaborate, and specific examples of metasilicic acid compounds include calcium metasilicate, and other phosphate vanadate can also be used.

Also, calcium phosphite, zinc calcium phosphite, calcium-supporting silica and calcium-supporting zeolite can also be used.

An amount of the above anticorrosive pigment to be mixed is preferably set in the range of 10 to 65% by weight in terms of solid matter in the composition of the above shop primer, and more preferably set in the range of 15 to 60% by weight. When the amount of the anticorrosive pigment to be mixed is less than 10% by weight, anti-corrosion performance by the anticorrosive pigment is largely deteriorated, and when it is more than 65% by weight, it is not preferable since a film forming property of the shop primer is deteriorated.

The composition of the present invention may contain both the above zinc powder and the above anticorrosive pigment.

The above composition can be mixed with other components in accordance with a desired purpose. The above-mentioned other components are not particularly limited and examples of the other components include pigment, a surfactant, an antioxidant, an ultraviolet absorber, AEROSIL, a silica particle or a silica dispersion such as colloidal silica, and additives such as an anti-precipitation agent and the like.

The above pigment is not particularly limited and it includes, for example, color pigments such as titanium dioxide, carbon black, red iron oxide and the like; extenders such as kaolin, clay, talc and the like; and powder or paste of titanium oxide having a photocatalitic activity, generally used in Coating compositions.

The total amount of the above-mentioned pigment and anticorrosive pigment to be mixed is preferably in the range of 0% by weight of a lower limit to 60% by weight of an upper limit in terms of solid matter in the composition.

The composition of the present invention described above can be produced by the following method. In addition, the composition of the present invention is not limited to a composition obtained by the following method.

The composition of the present invention can be obtained by hydrolyzing and polymerizing organosilicate or a low molecular weight condensate thereof in a solvent containing a water-soluble and volatile stabilizer and water. A commercially available organosilicate is not particularly limited, and examples of this organosilicate include tetramethoxysilane, MS51, MS56 and MS56S (all produced by Mitsubishi Chemical Corporation) as methylsilicate, and tetraethoxysilane, Ethyl silicate 28, Ethyl silicate 40 and Ethyl silicate 48 (all produced by COLCOAT Co., Ltd.) as ethylsilicate, and methyltriethoxysilane, phenyltriethoxysilane, phenyltrimethoxysilane, and methylphenyldimethoxysilane.

The hydrolysis and polymerization of organosilicate in the above-mentioned method of producing a composition is not particularly limited and this can be performed, for example, by the step in which a stabilizer is mixed in water, and then to this mixed solution, organosilicate is added dropwise, and the resulting mixture is stirred and mixed at 20 to 90°C for 1 to 48 hours.

In the hydrolysis of organosilicate, it is preferred to use acid or base as a catalyst. In the present invention, when the above stabilizer is a basic compound such as amines, it is unnecessary to add a catalyst additionally since the stabilizer acts as a catalyst.

When the above stabilizer is a neutral compound such as β-ketoester, β-diester or β-diketone in the above-mentioned step, the above step is preferably performed with the addition a catalyst. As the catalyst, acids such as acetic acid can also be used in addition to a basic compound also acting as the above stabilizer. As the above catalyst, a volatile substance is preferably used in that the volatile substance can be removed by heating. In addition, the method of producing the composition described above also constitutes the present invention.

The above composition can be used for publicly known applications of the hydrolysate of a silicate compound such as coating compositions for various applications (for example, a shop primer, a coating composition for hydrophilic treatment), a surface protection material such as a hard coat, a surface modifier for hydrophilic treatment and a forming material of porous body. The coating composition containing the above composition also constitutes the present invention.

The above coating composition can be applied to a substrate by a common coating method, for example, a publicly known method such as spraying, dipping, brushing, roller application and the like, and generally, a coated film with a thickness of 10 to 150 µm can be obtained. And, drying after the applications of a coating composition can be performed at room temperature to 80°C or at about 200°C as required.

### EFFECT OF THE INVENTION

In accordance with the present invention, a composition containing a hydrolysate of organosilicate, which is stable and reduces an environmental burden without using alcohol, could be obtained. Further, the composition of the present invention does not exert an influence upon the chemical properties of silicate compounds in using it since it does not contain miscellaneous ions such as a highly alkaline metal ion and a free anion.

### BEST MODES FOR CARRYING OUT THE INVENTION

Hereinafter, the present invention will be described in more detail by way of examples, but the present invention is not limited to these examples. In addition, "%" means "% by weight" in Examples, unless otherwise specified. Example 1

After 11 g of acetyl acetone was mixed in 59 g of water, 9 g of a silicate condensate (Ethyl silicate 40: produced by COLCOAT Co., Ltd., solid matter content 40%) was added to this mixture, and the mixture was stirred at 30°C for 6 hours to obtain a binder resin 1. This binder resin was in a state of a clear solution and very stable without gelating even after storing the resin for two or more months.

### Example 2

After 3 g of dimethylethanolamine was mixed in 100 g of water, 20 g of a silicate condensate (Ethyl silicate 28: produced by COLCOAT Co., Ltd., solid matter content 28%) was added to this mixture, and the mixture was stirred until the mixture becomes clear. Then, to this mixture solution, 30 g of acetyl acetone was gradually added dropwise and after the completion of adding dropwise, the solution was stirred at 30°C for 12 hours to obtain a binder resin 2. This binder resin was in a state of a clear solution and very stable without gelating even after storing the resin for two or more months.

### Example 3

After 10 g of N-methylethanolamine was mixed in 50 g of water, 15 g of a silicate condensate (Ethyl silicate 48: produced by COLCOAT Co., Ltd., solid matter content 48%) and 8 g of acetyl acetone were added dropwise separately to this mixture. After the completion of adding dropwise, the mixture was stirred at 50°C for 10 hours to obtain a binder resin 3. This binder resin was in a state of a clear solution and very stable without gelating even after storing the resin for two or more months.

### Example 4

After 30 g of dimethylethanolamine was mixed in 60 g of water, 10 g of a silicate condensate (MS56: produced by Mitsubishi Chemical Corporation, solid matter content 56.5%) was added to this mixture, and the mixture was stirred at 30°C for 20 hours to obtain a binder resin 4. This binder resin was in a state of a clear solution and very stable without gelating even after storing the resin for two or more months.

### Example 5

After 33 g of dimethylethanolamine was mixed in 54 g of water, 13 g of a silicate condensate (MS51: produced by Mitsubishi Chemical Corporation, solid matter content 52%) was added to this mixture, and the mixture was stirred at 50°C for 10 hours to obtain a binder resin 5. This binder resin was in a state of a clear solution and very stable without gelating even after storing the resin for two or more months.

### Example 6

After 28 g of N-methylethanolamine was mixed in 55 g of water, 13 g of a mixture of a silicate condensate (MS56) and methylphenyldimethoxysilane in proportions of 3:1 was added to this mixture, and the mixture was stirred at 50°C for 10 hours to obtain a binder resin 6. This binder resin was in a state of a clear solution and very stable without gelating even after storing the resin for two or more months.

### Example 7

After 10 g of N-methylethanolamine was mixed in 77 g of water, 13 g of a silicate condensate (MS56S: produced by Mitsubishi Chemical Corporation, solid matter content 59%) was added to this mixture, and the mixture was stirred at 50°C for 6 hours to obtain a binder resin 7. This binder resin was in a state of a clear solution and very stable without gelating even after storing the resin for two or more months.

### Example 8

After 1.1 g of dimethylethanolamine was mixed in 65.9 g of water, 33 g of Ethyl silicate 28 (monomer) was added to this mixture, and the mixture was stirred at 50°C for 6 hours to obtain a binder resin 8. This binder resin was in a state of a clear solution and very stable without gelating even after storing the resin for two or more months.

### Example 9

After 30 g of dimethylethanolamine was mixed in 60 g of water, 10 g of a silicate condensate (MS56S) was added to this mixture, and the mixture was stirred at 30°C for 10 hours to obtain a binder resin 9. This binder resin was in a state of a clear solution and very stable without gelating even after storing the resin for two or more months.

### Comparative Example 1

After 10 g of acetic acid was mixed in 60 g of water, 10 g of a silicate condensate (MS56) was gradually added to this mixture. The mixture was stirred at 30°C for 3 hours and consequently it increased in viscosity to gelate.

### Comparative Example 2

After 0.1 g of dimethylethanolamine was mixed in 60 g of water, 10 g of a silicate condensate (MS56) was added to this mixture, and the mixture was stirred at 30°C for 10 hours. This mixture produced a precipitation in particle form and did not become a clear solution.

### Examples 10 to 19 and Comparative Examples 3 to 5

On the basis of the compositions shown in Table 1, each mixed components was dispersed with glass beads using a disper to prepare a coating composition. All units in Table are parts by mass. After the resulting coating composition was applied onto a substrate (A2024 aluminum plate) by spraying, it was subjected to forced drying at 50°C for 1 hour to obtain a coated film. In Comparative Example 5, a coated film was obtained by baking the coating composition at 150°C for 1 hour.

The coated films obtained in Examples 10 to 19 and Comparative Examples 3 to 5 were evaluated according to the following evaluation methods. The results of evaluations are shown in Table 1.

### (Water resistance test)

After each coated film was immersed for 48 hours in a hot water of 50°C, its appearance was visually observed.
⊚: there are no dissolution and peeling off and cracks are not observed.
○: there are no dissolution and peeling off but fine cracks are produced.
Δ: there is no dissolution but cracks are produced.
×: a coated film is dissolved during immersion.

### (Adhesion test)

The test was carried out according to ASTM D3359. A X-shaped crosscut which reaches the surface of a substrate through a coated film on the test piece was cut with a cutter and an adhesive cellotape was stuck thereon and peeled off to investigate the superiority or inferiority of adhesion to the substrate.

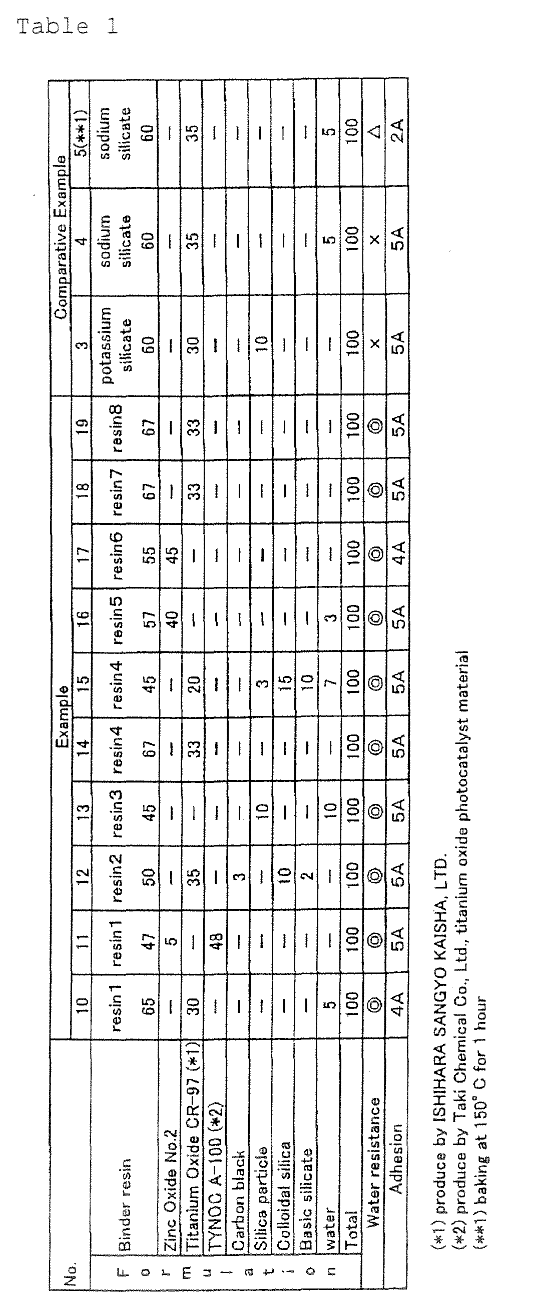

It was shown from Table 1 that a coated film obtained from a coating composition containing the composition of the present invention is superior in water resistance and adhesion.

### Examples 20 to 31 and Comparative Examples 6 and 7

On the basis of the compositions shown in Table 2, each mixed components was dispersed with glass beads using a disper to prepare a coating composition. All units in Table are parts by mass. After the resulting coating composition was applied onto a shot blasted plate by spraying, it was dried at room temperature for 7 days to obtain a coated film. The obtained coated films were evaluated according to the following evaluation methods.

### (Exposure test)

The coated film was exposed to a seabeach environment for 1 month to rate the occurrence of rust Visually according to the following criteria.
⊚: rust is not found on the surface of a coated film.
○: rust is not found but fine cracks are produced.
Δ: small areas of rust are produced over the whole area of a coated film.
×: rust is produced too such an extent that a coated film is peeled off.

### (SST performance)

After a salt spray test was performed for 300 hours according to JIS K 5400 9.1, the surface of a coated film was Visually observed to rate the presence or absence of the occurrence of rust according to the following criteria.
⊚: rust and blister are not found on the surface of a coated film.
○: rust is not found but small blisters are found.
Δ: rust is found at crosscut portions.
×: rust is also found at other portions in addition to crosscut portions.

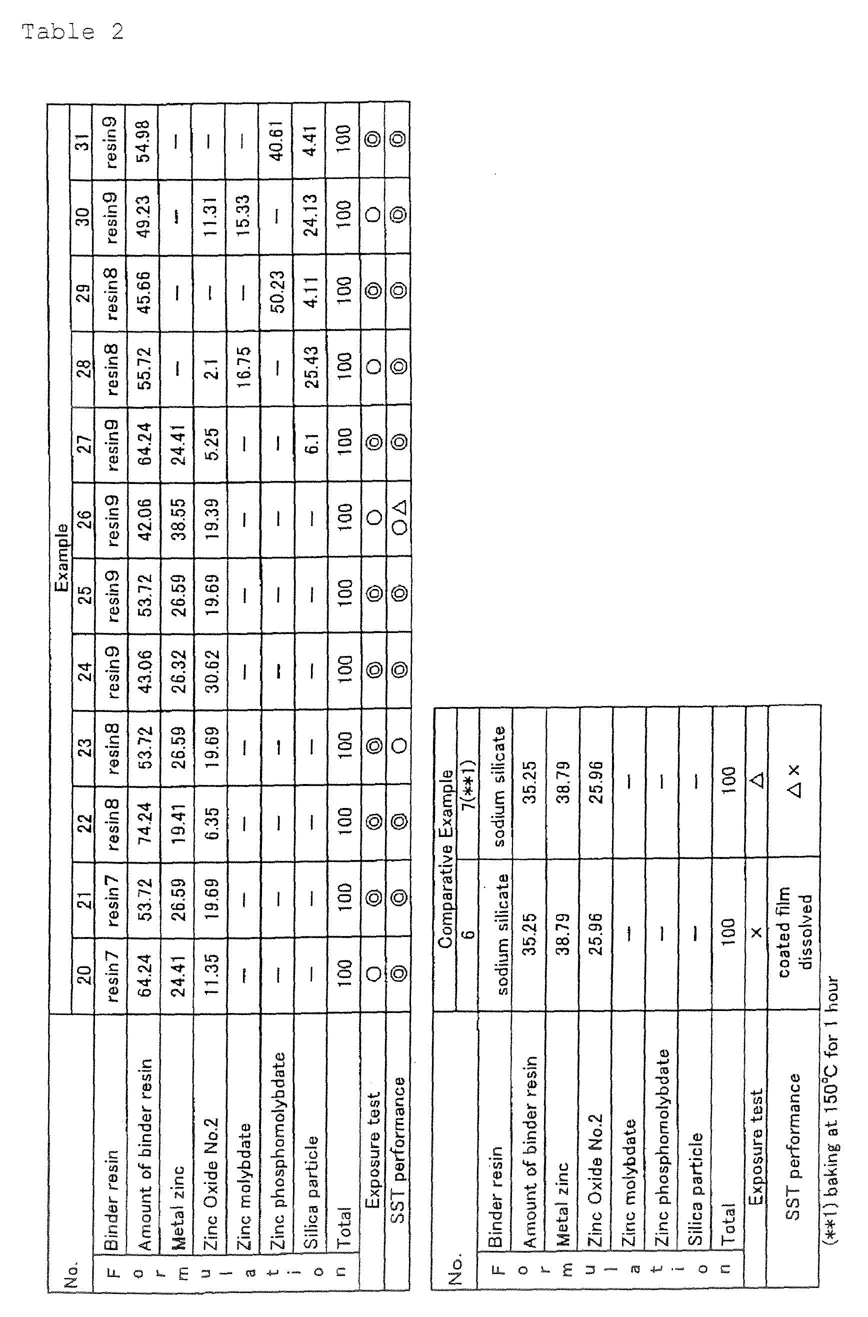

It was shown from Table 2 that a coated film obtained from a coating composition containing the composition of the present invention is superior in a rust preventing property.

### INDUSTRIAL APPLICABILITY

The composition of the present invention is a highly stable water-borne composition containing a hydrolysate of organosilicate and it can be used for a coating composition and the like.

## Claims

1. A composition containing a hydrolysate of organosilicate, a water-soluble and volatile stabilizer and water, wherein the content of water is 30% by weight or more of the whole composition.

2. The composition according to claim 1,
wherein the stabilizer is a compound having at least one lone electron-pair capable of being coordinated.

3. The composition according to claim 1 or 2,
wherein the stabilizer is a compound containing a nitrogen atom and/or a basic compound.

4. The composition according to claim 3,
wherein the stabilizer is at least one compound (A) selected from the group consisting of amine, pyridine and derivatives thereof.

5. The composition according to claim 4, wherein the stabilizer is alkanolamine.

6. The composition according to claim 1,
wherein the stabilizer is a compound (B) having at least one bond selected from the group consisting of (β-ketoester, (β-diester and β-diketone.

7. The composition according to claim 1,
wherein the stabilizer is a mixture formed by mixing at least one compound (A) selected from the group consisting of amines, pyridines and derivatives thereof and a compound (B) having at least one bond selected from the group consisting of β-ketoester, β-diester and β-diketone in the proportions (A)/(B) of 1/0 to 1/1 by mole.

8. The composition according to anyone of claims 1 to 7, wherein the content of the stabilizer is 0.05 times or more by mole larger than an amount of a silicon atom.

9. The composition according to any one of claims 1 to 8, wherein the organosilicate is alkyl silicate or aryl silicate.

10. The composition according to claim 9,
wherein in the alkyl silicate, its alkyl group is at least one species selected from the group consisting of a methyl group, an ethyl group, a propyl group, an isopropyl group and a butyl group.

11. The composition according to claim 10 wherein in the alkyl silicate, its alkyl group is a methyl group and/or an ethyl group.

12. A coating composition containing the composition according to any one of claims 1 to 11.

13. A method of producing the composition according to any one of claims 1 to 11,
comprising the step of hydrolyzing and polymerizing organosilicate or a low molecular weight condensate thereof in a solvent containing a water-soluble and volatile stabilizer and water,
wherein in said step, the content of water is 30% by weight or more of the whole reactant mixture.

14. A shop primer containing the composition according to any one of claims 1 to 11 and zinc powder.

15. A shop primer containing the composition according to any one of claims 1 to 11 and an anticorrosive pigment.
